# EUROPEAN PATENT SPECIFICATION

(11) **EP 4 337 490 B1**
(45) Date of publication and mention of the grant of the patent: **23.04.2025**
(21) Application number: 22728844.6
(22) Date of filing: 12.05.2022
(51) Int. Cl.: B60L 53/35

(54) **MANIPULATOR FOR POSITIONING AN ENERGY TRANSFER UNIT FOR CHARGING A VEHICLE AND CHARGING STATION FOR THE SAME**
MANIPULATOR ZUM POSITIONIEREN EINER ENERGIEÜBERTRAGUNGSEINHEIT ZUM LADEN EINES FAHRZEUGS UND LADESTATION DAFÜR
MANIPULATEUR POUR LE POSITIONNEMENT D'UNE UNITÉ DE TRANSFERT D'ÉNERGIE POUR LA CHARGE D'UN VÉHICULE ET STATION DE CHARGE CORRESPONDANTE

(30) Priority: 12.05.2021 NL 2028211
(43) Date of publication of application: 20.03.2024
(73) Proprietor: Prodrive Technologies Innovation Services B.V., 5692 EM Son en Breugel (NL)
(72) Inventor: VAN BEMMEL, Ronald Johannes Cornelis, 5692 EM Son en Breugel (NL); SNIJDERS, Tom Cornelis, 5692 EM Son en Breugel (NL); VAN DER KANT, Tom Adrianus Henricus, 5692 EM Son en Breugel (NL)
(74) Representative: IP Maison
(86) International application number: PCT/EP2022/062866
(87) International publication number: WO 2022/238521

(56) References cited:
- EP-A1- 3 805 041
- WO-A1-2019/060939
- WO-A1-2020/245465
- DE-B3- 102018 106 046
- KR-B1- 101 034 038

## Description

### Technical field

The present invention generally relates to a manipulator for charging vehicles and specifically to a manipulator for positioning an energy transfer unit for charging vehicles. The invention further relates to a charging station comprising such a device.

### Background art

Connection devices for charging electric vehicles automatically are known in the art. US20160332525 A1 discloses a connection device for conductive charging providing lifting means to move a charging head towards a stop surface provided on an underbody of a vehicle. Upon striking the stop surface, continued actuation of the lifting means provides alignment along the stop surface. The disadvantage of such a connection device is that it allows a limited lateral offset and therefore requires very accurate positioning of the vehicle. Furthermore, considerable lifting force will be required for moving the charging head along the stop surface orthogonal to the direction of the lifting force.

EP0788212A2 discloses a more complex connection system for inductive charging allowing more positioning freedom for the vehicle through the use of stacked linear actuators. The system comprises orthogonally placed linear actuators for moving a body comprising a charging coil in the horizontal plane, wherein the body further comprises a pantograph mechanism for moving the charging coil in the vertical direction. The disadvantage of such a connection system is that it requires a large number of moving elements, which are sensitive to fouling and it are difficult to shield.

WO2019060939 discloses an alternative solution for actively moving a plug in a volume through the use of a number of stacked rotary and linear actuators. The system comprises a rotatable platform provided with a set of stacked linear actuators. The disadvantage of such a manipulator is of such a connection system is that it requires a large number of moving elements, which are sensitive to fouling and it are difficult to shield. Furthermore, it requires the use of an axisymmetric charging head, because the charging head rotates when the rotatable platform is rotated.

### Summary of the invention

It is an object of the invention to provide a manipulator that solves at least one disadvantage and preferably all disadvantages of the prior art.

According to a first aspect of the invention the object is achieved by providing a manipulator according to the appended claims. For instance, a manipulator for positioning an end effector such as an energy transfer unit for charging vehicles. The manipulator comprises a support and a stage comprising the end effector. The manipulator further comprises a first link connecting the stage and the support. The first link may comprise a first end providing a first pivoting connection connected to the support and a second end providing a second pivoting connection connected to the stage. The first link may define a first longitudinal axis between the first end and the second end. Typically, such first link comprises an elongate member extending between the first end and the second end. The manipulator further comprises a first and a second actuating mechanism providing an actuatable connection between the stage and the support through the first link. Each of the first and the second actuating mechanisms may be configured to exert a first (linear) actuating force on the first link for moving the second end of the first link (relative to the support or the first end of the first link) through a volume. The manipulator may further comprise a second link (e.g. an elongate member, such as a cable or a rod) comprising a first end providing a first pivoting connection connected to the support and a second end providing a second pivoting connection connected to the stage at a first position offset from the second pivoting connection of the first link.

The first link and the first and second actuating mechanism provide a means for positioning the end effector (e.g. an energy transfer device) using a limited number of moving parts, thereby improving the robustness and limiting the sensitivity with respect to fouling. Furthermore, by connecting the first and second actuating mechanism to the stage through the first link enables manipulator configurations wherein the first link is the single main body that moves through the environment while positioning the end effector. In addition, the second link provides a means for substantially maintaining an orientation of the end effector along a direction, thereby enabling the use of a non-axisymmetric (conductive or inductive) energy transfer unit and/or reducing the alignment requirements for the vehicle.

In a beneficial embodiment, the first actuating mechanism and the second actuating mechanism jointly define a parallel actuating mechanism configured to exert a first actuating force on the first link for moving the second end of the first link (relative to the support or the first end of the first link) through a volume. A parallel actuating mechanism in this disclosure should be interpreted as a mechanism functionally arranged in parallel as opposed to functionally arranged in series, or in other words stacked, and thus should not be interpreted restrictively as meaning geometrically arranged in parallel.

Beneficially, the first actuating and the second actuating mechanism each comprise a first end (directly) connected to the support, for instance the first and second actuating mechanism are arranged (directly) on the support, and a second end (directly) connected to the first link. The second end of the first actuating mechanism and the second end of the second actuating mechanism may be connected to the first link at a first and second location of the first link, respectively, wherein the first and second location are arranged offset from the first end of the first link. Preferably, the first and second actuating mechanism are configured to adapt a distance between the corresponding first and second end, such that an actuating force is exerted on the first link for moving the second end of the first link (relative to the support or the first end of the first link) through a volume is generated between the first and the second end. Preferably, the first and second actuating mechanism are structurally similar.

Beneficially, a first tension exerted by the first link at the second end of the first actuating mechanism and a second tension exerted by the first link at the second end of the second actuating mechanism each comprise a first directional component, wherein the first directional component of the first and second tension are arranged in a same sense of direction. Beneficially, the first and second tension each comprise a second directional component orthogonal to the first directional component, wherein the second directional component of the first and second tension are arranged in an opposite sense of direction.

Preferably, the first actuating force of the first and second actuating mechanism each provide a torque about the first pivoting connection of the first link. The torques provided by the first and the second actuating mechanism are configured to move the second end of the first link through a volume. For instance, a direction of the torque provided by the first actuating mechanism is not parallel to a direction of the torque provided by the second actuating mechanism. The manipulator may be configured such that a direction of the torque provided by the first actuating mechanism is orthogonal to a directional component of a direction of the torque provided by the second actuating mechanism.

Preferably, the manipulator is configured such that each of the first actuating forces of the first and second actuation mechanism are oblique to the first longitudinal axis. Such first actuation forces may each have a first directional component parallel to the first longitudinal axis. Such first actuation forces may each have a second directional component perpendicular to the first longitudinal axis. Additionally, such first actuation forces may each have a third directional component perpendicular to the corresponding first and second directional component.

In an embodiment of a manipulator according to the present invention, the actuating forces of the first and the second actuating mechanisms may be exerted on the first link at a first and second location of the first link, respectively. Both the first and second location may be provided offset from a longitudinal axis defined by the first link, preferably at opposing sides of the longitudinal axis. The actuation force of the first and second actuating mechanism in such embodiments may be configured to be parallel, but preferably a direction of the actuation force of the first actuation mechanism is configured orthogonal to a directional component of the actuation force of the second actuation mechanism. The first and second location may however also coincide in the event that the actuation force of the first actuation mechanism is configured to be orthogonal to a directional component of the actuation force of the second actuation mechanism.

To allow more freedom with respect to alignment requirements, the end effector may be connected to the stage at a second position offset from the second pivoting connection of the first link (e.g. an axis of rotation of the stage). Preferably, the end effector comprises an energy transfer unit, wherein the energy transfer unit advantageously is pivotally connected to the stage.

The first and second actuating mechanism may comprise any suitable means for providing the corresponding actuating force exerted on the first link. Actuating mechanisms in the present disclosure therefore comprise an active component such as an actuator (e.g. motor). Examples of suitable actuating mechanisms comprise actuating mechanisms comprising a rotary motor and a cable connection, actuating mechanism comprising comprise linear magnetic motors or actuating mechanisms comprising a rotary motor and gears (e.g. rack and pinion, belt drive) configured for providing a linear motion.

Advantageously, the first and second actuating mechanisms comprise a third and a fourth link, respectively. The third and fourth link may comprise a first end providing a first pivoting connection connected to the support and/or a second end providing a second pivoting connection connected to the first link. The first actuating mechanism may comprise a first actuator configured for moving the first end of the third link relative to the support along a first trajectory (e.g. linear) and the second actuating mechanism may comprise a second actuator configured for moving the first end of the fourth link relative to the support along a second trajectory (e.g. linear).

Preferably, one of the first and the second pivoting connection of both the third and fourth link are configured for limiting (a range of) a single rotational degree of freedom of the corresponding respective link. Preferably, the respective pivoting connection is configured to prevent a single rotational degree of freedom of the corresponding respective link For instance, such pivoting connection may comprise a single joint providing two degrees of freedom or a plurality of stacked joints providing just two degrees of freedom. The benefit of providing pivoting connections having limited rotational degrees of freedom is that it may improve robustness of the manipulator.

The first and second actuator mechanism may comprise a first and second prismatic joint, respectively, connected to the corresponding first end. The first and the second prismatic joint may be configured to provide linear first and second trajectories, respectively. Preferably, the first and the second actuator each provide a second actuating force configured to be co-linear with the corresponding trajectory. Additionally or alternatively, the prismatic joint and the corresponding trajectory may be configured co-linear. Such combination of guidance and imposition of displacement of the first ends provided by the prismatic joints limit the generation of moments and frictional forces, which would otherwise be caused when actuation forces are not aligned or co-linear with the prismatic joint. For example, the first and the second prismatic joint may extend (co-linearly) from a linearly actuated part of the corresponding (linear) actuator, such that the linear actuating force generated by the actuator is provided co-linearly to a central longitudinal axis of a moving part of the corresponding prismatic joint. The actuator may comprise a rack and a pinion, wherein a first part of the prismatic joint, such as a rod, extends from the rack and is configured for being guided along a second part of the prismatic joint, such as a linear bearing (e.g. a bushing) that may be (fixedly) connected to the support. The benefit of using a rod-shaped first part of the prismatic joint is that it provides a simple means that may for instance extend through a seal provided in a cover shielding sensitive components of the manipulator, such as motors and gears. For instance, the support may comprise such a cover.

Preferably, both the first and the second trajectory are substantially horizontal. Such a configuration is ideally suitable for embodiments wherein the manipulator is configured for charging a vehicle from an underside or a topside of the vehicle.

In a beneficial embodiment, the manipulator further comprises a base and a third actuator, such as a linear actuator (e.g. a rotary motor comprising means such as a rack and pinion arrangement or belt drive to provide a linear motion).The third actuator may be configured for moving the support along a (linear) third trajectory (e.g. substantially horizontal) relative to the base. This allows a larger initial misalignment between the vehicle and the manipulator. Furthermore, it enables moving the support along the third trajectory between a first (shielded) state, for instance wherein the support or the energy transfer unit is shielded from the environment for example by a housing, and a second (operating) state, for instance wherein the energy transfer unit can be positioned for charging a vehicle. Another benefit of such an embodiment is its so-called back-drivability, wherein a movement of the stage is induced by an external force applied (e.g. by the socket for instance provided on a vehicle) to the manipulator stage. In situations wherein such movements are induced in a direction substantially parallel to the third trajectory only the support has to be moved, which is only countered by the third actuator. In situations wherein such movements are induced within a plane substantially orthogonal to the third trajectory only the first and second actuating mechanisms have to be moved, which may only be countered by the first and second actuator.

The support may be configured to comprise the aforementioned cover for shielding. In a beneficial embodiment the motors of each of the actuators are configured to be shielded by the cover. Preferably, the gears of the first and the second actuator (e.g. rack and pinion) are provided in the cover. Furthermore, the pinion or gear of the third actuator may be provided on the support and the rack or belt of the third actuator may be provided on the base.

The manipulator may comprise a housing, which may be fixedly connected to the base. The third actuator may be configured for moving the support between a first state, wherein the support and preferably the first link or the energy transfer unit is completely received within the housing, and a second state, wherein the first link at least in part extends from a side of the housing. Beneficially, the third trajectory may have a directional component parallel to the first and second trajectory.

The manipulator may further comprise a third prismatic joint configured for guiding the movement of the support with respect to the base. The third prismatic joint may comprise a first part fixedly connected to the base and a second part fixedly connected to the support. Advantageously, the third prismatic joint comprises at least one, preferably two (parallel) telescopic guides for guiding the movement of the support with respect to the base. Preferably, each of the at least one telescopic guide has a stroke substantially parallel to the third trajectory. A telescopic guide may comprise any suitable type of extendable guide. It may for instance comprise longitudinal elements configured for sliding into one another, but preferably comprises longitudinal elements configured for sliding alongside one another.

The first and second trajectory may define a first plane. Preferably, the first trajectory, the second trajectory and a projection of the third trajectory on the first plane each have with respect to each other one, one of a list of: an acute angle (α, β, γ) of less than 60 degrees, preferably less than 30 degrees, more preferably less than 10 degrees and even more preferably less than 5 degrees and no angle. This facilitates shielding of actuators and other moving parts of the manipulator, since all trajectories comprise at least one common directional component.

Additionally or alternatively, the first end of the first link is provided in a second plane parallel to the first plane, wherein the second plane is other than the first plane. Preferably, at least one of the first end of the third link, the second end of the third link, the first end of the fourth link and the second end of the fourth link is configured outside the second plane. This enables a defined movement from the first joint with respect to the support under all situations. In one example, the first link comprises a protrusion protruding away from the first longitudinal axis (e.g. the first link comprises a shoulder), wherein the protrusion is configured for pivotally connecting the second end of the third link, and the second end of the fourth link. The first end of the second link may be configured outside the second plane. Embodiments, wherein the first link comprises a protrusion protruding away from the first longitudinal axis, are also suitable for actuating mechanisms alternative to actuating mechanisms comprising a third and a fourth link.

The first end of the first link may be configured equidistant from the first trajectory and the second trajectory. Preferably, the first end of the second link is configured in closer proximity to the first trajectory than the second trajectory. In such an arrangement the second link can function as a push or pull rod for substantially maintaining an orientation of the stage. In one example of such a configuration, the first link and the second link each comprises a longitudinal axis and wherein the longitudinal axis of the first link is substantially parallel to the longitudinal axis of the second link.

The first end of the first link may provide a first pivoting connection to the support, wherein the pivoting connection is configured for limiting (a range of) a single rotational degree of freedom of the first link. Preferably, the pivoting connection may be configured to prevent a single rotational degree of freedom. The single rotational degree of freedom may be configured to provide a reaction-torque in response to the first actuating force of each of the first and second actuating mechanism. The reaction-torque provided by the pivoting connection preferably comprises a direction having a directional component orthogonal to the direction of the torque provided by the first actuating mechanism and the second actuating mechanism. This may prevent tilting of the stage about the longitudinal axis of the first link and thereby simplifies alignment of the energy transfer unit.

The second end of the first link may provide a second pivoting connection to the stage. The second pivoting connection of the first link may define an axis of rotation of the stage, wherein the second pivoting connection may be configured for providing a single rotational degree of freedom about the axis of rotation. Preferably, the stage comprises a sidewall being at least in part circular about the axis of rotation. This may shield the second end of the first link in any orientation of the first link.

The energy transfer unit may be connected to the stage at any location, for instance at a first position radially extending from the axis of rotation. Preferably, the energy transfer unit is pivotally connected to the stage such that it can be aligned, for instance by contacting a surface of the vehicle, along to multiple axes of rotation. The energy transfer unit may further comprise communicating means for providing communication, for instance regarding charge levels, between the vehicle and the manipulator. Additionally or alternatively, the energy transfer unit may comprise sensors or beacons for guiding the energy transfer unit of the manipulator towards the vehicle.

To limit the exposure of features of the manipulator to the environment, the first link may provide a conduit parallel to the first longitudinal axis (i.e. an axis between the first end and the second end of the first link). The conduit may be configured for providing passage to the second link. Embodiments of a manipulator according to the present invention may comprise an energy cable configured to transfer energy along the first link to the end effector. The conduit of the first link may additionally or alternatively provide passage for the energy cable. A stage configured to shield the second end of the first link, for instance as described before, may also be configured to shield the conduit and thereby for instance the second link or the energy cable.

According to a second aspect of the invention the object is achieved by a charging station according to the appended claims. A charging station according to the present invention achieves the object of the invention in a similar way as a manipulator according to the present invention.

In the present disclosure, a relative movement of one end of a link with respect to another end of such link is defined by a change in orientation of the one end with respect to the other end according to a stationary (e.g. with respect to the support) cartesian coordinate system, or in other words any movement changing a direction of a longitudinal axis defined by the one end and the other end. Such relative movement may comprise a rotation of such link or an unequal translational movements of the one end with respect to the other end, but does not comprise movements consisting of equal translational movements in terms of distance and direction of the one end and the other end. For instance, pivoting the first link about the first pivoting connection moves the second end of the first link relative to the first end of the first link.

### Brief description of the figures

Aspects of the invention will now be described in more detail with reference to the appended drawings, wherein same reference numerals illustrate same features and wherein:
Fig. 1 represents a perspective view of an embodiment of a manipulator according to the present invention in an operating state.
Fig. 2A and B represent a top view, wherein a top-side of the housing has been removed, and a side, respectively of an embodiment of a manipulator according to the present invention in a shielded state.
Fig. 3A-D represent two top views, wherein a top-side of the cover and a top-side of the housing have been removed, a side view and a bottom view, wherein a bottom side of the first link has been removed, respectively, of an embodiment of a manipulator according to the present invention in an operating state.
Fig. 4A and 4B represent a top, wherein a top-side of the cover and a top-side of the housing have been removed, and bottom view, wherein a bottom side of the first link has been removed, respectively, of an embodiment of a manipulator according to the present invention in an operating state.

### Detailed description of embodiments

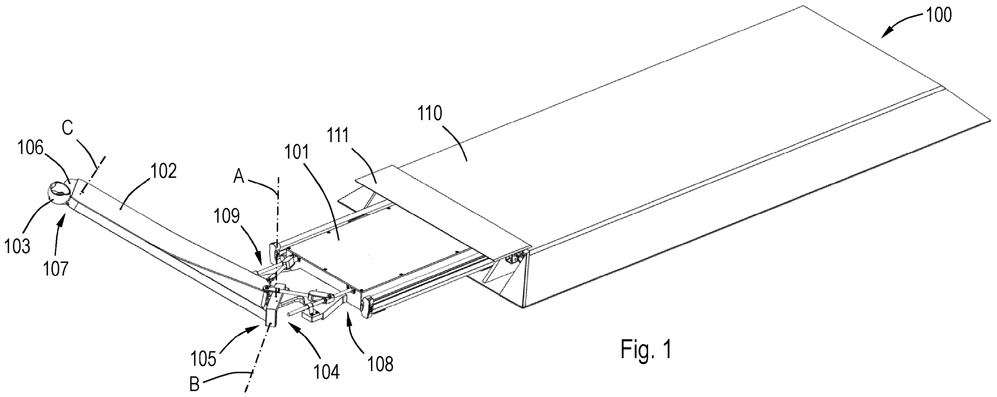

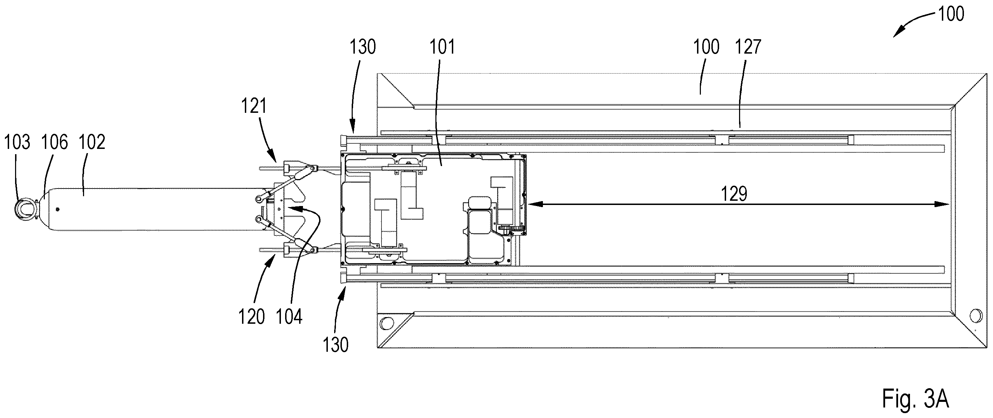

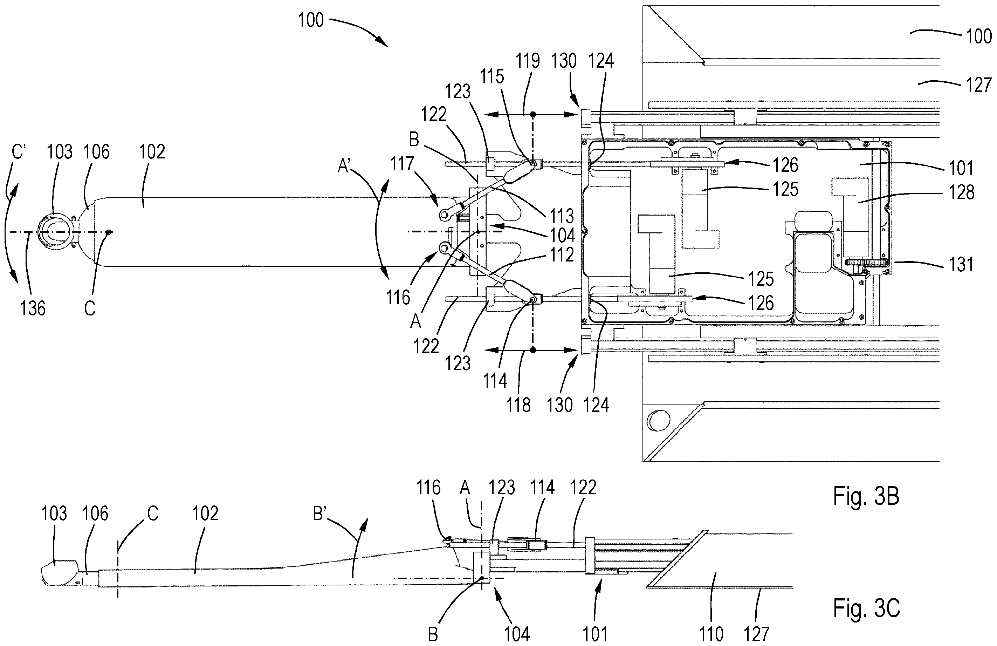

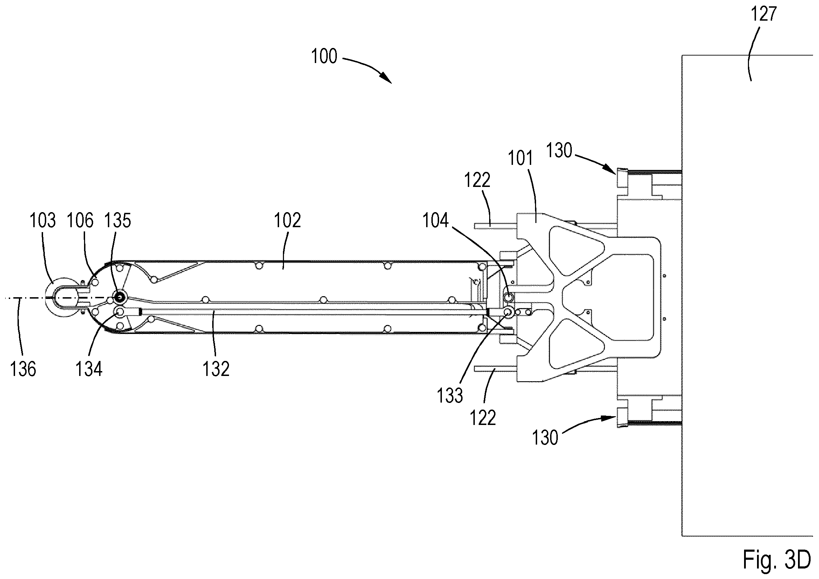

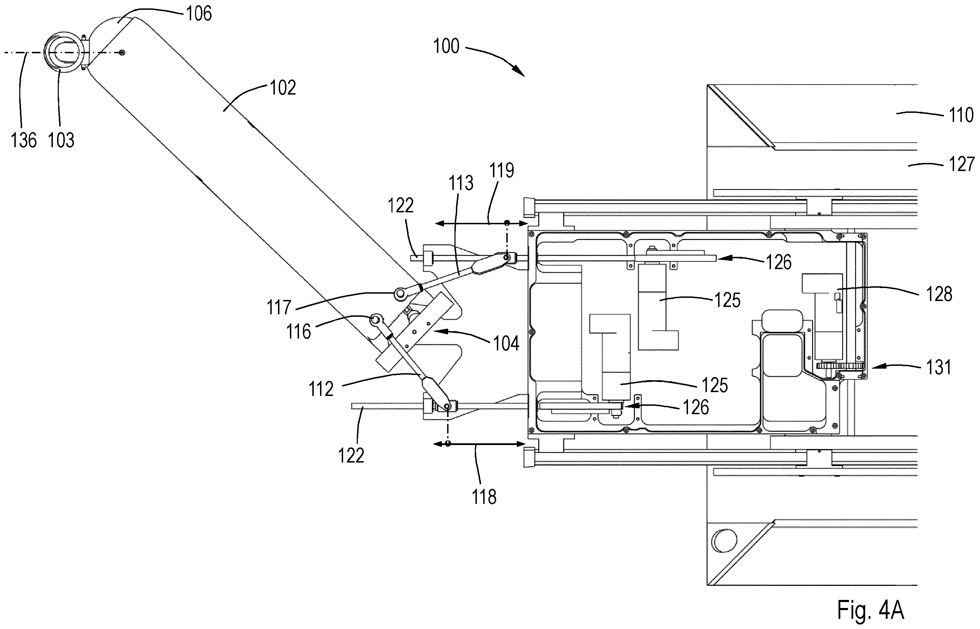

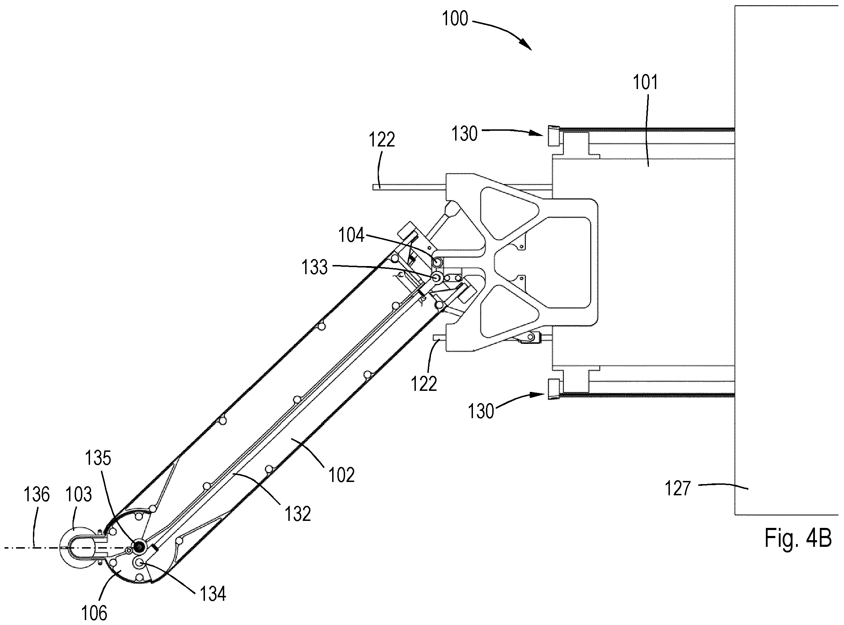

Referring to Fig. 1, a manipulator 100 according to the present invention comprises a support 101 and a first link 102 configured to pivot with respect to the support 101 to position an end effector 103 (e.g. an energy transfer unit) in an operating volume when the manipulator 100 is in an operating or second state (also see Figs. 3 and 4). Therefore, the first link 102 is pivotally connected to the support 101 by a pivoting connection 104 provided at a first end 105 of the first link 102 and pivotally connected to a stage 106 comprising the end effector 103 at a second end 107 of the first link 102. Furthermore, a first and a second actuating mechanism 108, 109 provide an actuatable connection configured to move the stage 106 relative to the support 101 via respective forces acting on the first link 102, preferably near the first end 105 of the first link 102. In the operating state, the support 101 may extend from a side of a housing 110. A hatch 111 may be provided configured to open the side of the housing 110 and allow the support 101 to extend from the housing 110.

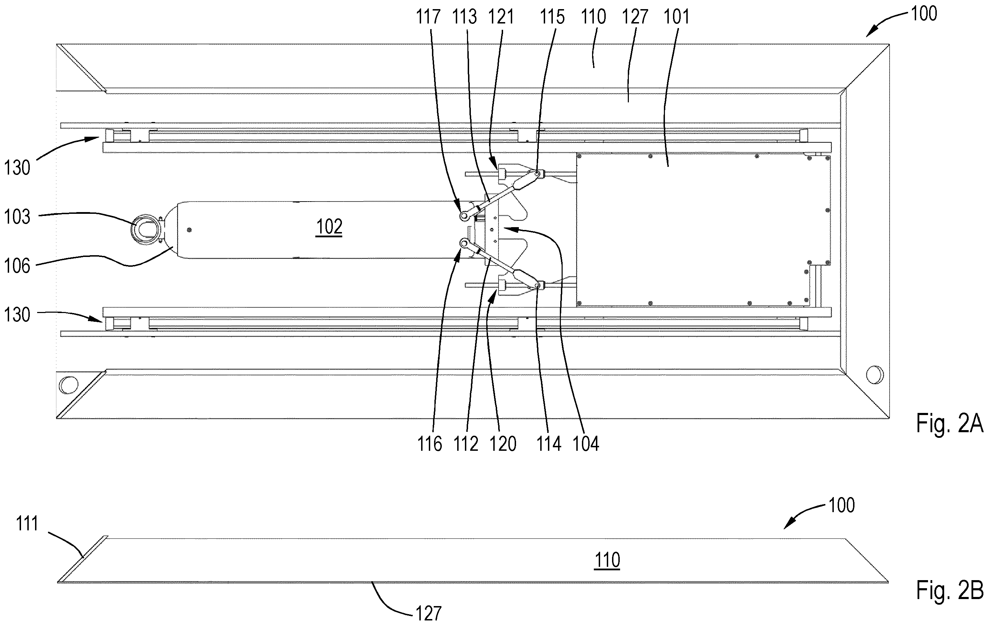

Further referring to Figs. 2A-B to 4A-B, the first and second actuating mechanism 108, 109 may comprise a third and a fourth link 112, 113, respectively. The third and fourth link 112, 113 each comprise a first end 114, 115 and a second end 116, 117. The second ends 116, 117 are pivotally connected to the first link 102, possibly at offset positions, even though this is not a requirement. The first ends 114, 115 are configured to move (e.g. translate) with respect to the support 101 along a first and a second preferably linear trajectory 118, 119, respectively. This movement along the first and second trajectory 118, 119 results in a pivoting movement of the first link 102 about pivoting connection 104, with respect to the support 101. Preferably, the second ends 116, 117 the third and fourth link 112, 113 are each pivotally connected to the first link 102 near the first end 105 of the first link for limiting the extent to which the third and fourth link 112, 113 extend into the environment.

Referring to Fig. 3B, the first and second actuating mechanisms 108, 109 are each configured to exert a force on the first link 102, in the pivotal connections at the second ends 116, 117 of the third and fourth links, respectively. These forces have opposite directional components, particularly in projection on a horizontal plane, allowing the first link to be moved about a vertical axis A defined by pivotal connection 104 along a direction A'. Referring to Fig. 3C, the pivotal connection 104 of the first link 102 to the support 101 and the pivotal connections of the second ends 116 and 117 of the third and fourth links on the first link 102 are preferably arranged in offset horizontal planes. This allows the first and second actuating mechanisms to move the first link 102 about a horizontal axis B defined by pivotal connection 104 along another direction B'.

Actuating the first and second actuating mechanisms 108, 109 simultaneously may result in a pulling or a pushing force exerted on the first link 102. In response, the second end 107 of the first link 102, the stage 106 and end effector 103 will be moved relative to the support 101 in a direction orthogonal to a plane defined by the first and second trajectory 118, 119, for instance away or towards a mounting surface (e.g. horizontal ground surface). Differentially actuating the first and second actuating mechanisms may, optionally in addition result in a movement of the second end 107 of the first link 102 in a direction having a directional component parallel to the plane defined by the first and second trajectory 118, 119, for instance sideways relative to the mounting surface (not shown).

Each of the first and second actuating mechanism 108, 109 may further comprise a prismatic joint 120, 121 arranged in parallel to the first and second trajectory 118, 119, respectively. The prismatic joints can be pivotally connected to the first end 114, 115 of the corresponding link 112, 113. Such prismatic joints 120, 121 may each comprise a rod 122 and two bushings 123, 124, wherein the rod 122 is configured for sliding along the bushings 123, 124. The rod 122 extending between two bushings 123, 124 may be directly pivotally connected to the first end 114, 115 of the corresponding link 112, 113.

Each of the first and second actuating mechanism 108, 109 may each further comprise an actuator 125, such as a linear motor or a rotary motor comprising a means 126 for converting a rotary motion to a linear motion, for instance using a rack and pinion or a belt drive. The linearly actuated part of the actuating means 126 may be connected co-linearly to the rod 122 to actuate the linear movement of the rod 122.

The manipulator 100 may comprise a base 127 and a third actuator 128. The third actuator 128 is configured to move the support along a third trajectory 129 with respect to the base 127 between a first state (see Fig. 2A and Fig. 2B) and a second state (see Figs. 1, 3 and 4). Preferably, the third trajectory 129 is linear and substantially parallel to a longitudinal axis of the first link 102 in the first state. The manipulator 100 may further comprise one, preferably two prismatic joints 130 (e.g. telescopic guides) for guiding the movement of the support 101 along the third trajectory 129. Preferably, the third trajectory 129 is a linear trajectory parallel to the first and second linear trajectories 118, 119.

The first, second and third actuators 125, 128 may comprise motors, such as rotary motors, fixedly connected to the support 101. The actuators may further comprise a means 126, 131 for converting a rotary motion to a linear motion, for instance using a rack and pinion or a belt drive. The first and second actuators 125 preferably comprise a rack and pinion. The third actuator 131 preferably also comprises a rack and pinion.

The support 101 may comprise a cover for shielding sensitive parts of the manipulator 100, such as parts of the first actuating mechanisms 108, parts of the second actuating mechanisms 109, parts of the third actuator 128, for example motors and means 126, 131 for converting a rotary motion to a linear motion (e.g. gears), which may for instance otherwise be exposed to the external environment in the second state.

The manipulator may comprise a housing 110 connected to the base 127 configured for shielding the first link 102, the stage 106 and the end effector 103 of the manipulator 100 in the first state. The cover 110 may further comprise a hatch 111 configured at a side of the cover 110 wherefrom the first link 102 may protrude in the second state. The hatch 111 being configured to move between a closed state in the first state, wherein the hatch 111 shields the first link 102, and an opened state in the second state, wherein the first link 102 may extend from the cover 110.

Further referring to Fig. 3D and 4B, the manipulator 100 may further comprise a second link 132 having a first end 133 pivotally connected to the support 101 and a second end 134 pivotally connected to the stage 106 at a location offset from a pivotal connection 135 of the second end 107 of the first link 102 to the stage. The pivotal connection 135 of the second end 107 of the first link 102 to the stage may provide an axis of rotation C of the stage for rotating the stage along a direction C'. Preferably, the first end 133 of the second link 132 is connected to the support 101 at a location offset from the pivotal connection 104 connecting the first end 105 of the first link 102 to the support 101. Preferably, the first link and the second link 102, 132 each define a longitudinal axis between the corresponding first and second ends, which longitudinal axes are substantially parallel. The first and second link 102, 132 may be configured to define a parallelogram or a trapezoid, wherein it is not required that all edges necessarily lie within a same plane. Such second link 132 substantially maintains an orientation 136 of the stage 106 with respect to the environment, when the first link 102 is moved sideways by the first and second actuating mechanisms 108, 109 (see Fig. 3 and Fig. 4).

Preferably, the second link 132 is arranged in a conduit defined within the first link 102. By way of example, the first link 102 can be hollow or tubular and the second link is arranged inside the tubular first link 102.

## Claims

1. Manipulator (100) for positioning an end effector (103) for charging vehicles, comprising:
a support (101),
a stage (106) comprising the end effector,
a first link (102) comprising a first end (105) providing a first pivoting connection (104) connected to the support and a second end (107) providing a second pivoting connection (135) connected to the stage, wherein the first link defines a first longitudinal axis between the first end and the second end,and
a second link (132) comprising a first end (133) providing a first pivoting connection connected to the support and a second end (134) providing a second pivoting connection connected to the stage at a first position offset from the second pivoting connection of the first link,
**characterised in that** the manipulator further comprises:
a first (108) and a second (109) actuating mechanism providing an actuatable connection between the stage and the support through the first link, each of the first and the second actuating mechanisms configured to exert a first actuating force on the first link for moving the second end of the first link through a volume.

2. Manipulator according to claim 1, wherein each of the first and the second actuating mechanisms is configured to exert a first linear actuating force on the first link for moving the second end of the first link relative to the first end of the first link through a volume.

3. Manipulator according to claim 1 or 2, wherein the first actuating force of the first and second actuating mechanisms each provide a torque about the first pivoting connection of the first link, preferably wherein a direction of the torque provided by the first actuating mechanism is not parallel to a direction of the torque provided by the second actuating mechanism.

4. Manipulator according to any one of the previous claims, wherein the first and second actuating mechanisms comprise a third and a fourth link, respectively, wherein each of the third (112) and fourth (113) link comprise a first end (114, 115) providing a first pivoting connection connected to the support and a second end (116, 117) providing a second pivoting connection connected to the first link, and wherein the first actuating mechanism comprises a first actuator (125, 126) configured for moving the first end of the third link relative to the support along a first trajectory (118) and wherein the second actuating mechanism comprises a second actuator (125, 126) configured for moving the first end of the fourth link relative to the support along a second trajectory (119), preferably wherein one of the first and the second pivoting connection of both the third and fourth link are configured for limiting a single rotational degree of freedom of the corresponding respective link, preferably the respective pivoting connection is configured to prevent a single rotational degree of freedom of the corresponding respective link, preferably wherein the first and the second actuator mechanism comprise a first (120) and a second (121) prismatic joint, respectively, connected to the corresponding first end, and wherein the first and the second actuator each provide a second actuating force configured to be co-linear with the corresponding trajectory, preferably wherein the prismatic joint and the corresponding trajectory are co-linear.

5. Manipulator according to any one of the previous claims, further comprising a base (127) and a third actuator (128, 131), wherein the third actuator is configured for moving the support along a third trajectory (129) relative to the base, preferably further comprising a third prismatic joint (130) configured for guiding a movement of the support with respect to the base, preferably wherein the third prismatic joint comprises at least one telescopic guide for guiding the movement, wherein each of the at least one telescopic guide has a stroke substantially parallel to the third trajectory, preferably further comprising a housing (110), wherein the third actuator is configured for moving the support between a first state, wherein the first link is completely received within the housing, and a second state, wherein the first link at least in part extends from a side of the housing, preferably in conjunction with claim 4, wherein the first and second trajectories define a first plane and wherein the first trajectory, the second trajectory and a projection of the third trajectory on the first plane each have with respect to each other one, one of a list of: an acute angle (α, β, γ) of less than 60 degrees, preferably less than 30 degrees, more preferably less than 10 degrees and even more preferably less than 5 degrees and no angle.

6. Manipulator according to claim 4 or 5, wherein the first and second trajectory define a first plane, wherein the first end of the first link is provided in a second plane other than the first plane and parallel to the first plane and wherein at least one of the first end of the third link, the second end of the third link, the first end of the fourth link and the second end of the fourth link is configured outside the second plane.

7. Manipulator according to any one of claims 4 to 6, wherein the first end of the first link is configured equidistant from the first trajectory and the second trajectory, preferably wherein the first end of the second link is configured in closer proximity to the first trajectory than the second trajectory.

8. Manipulator according to any one of the previous claims, wherein the first end and the second end of the second link define a second longitudinal axis and wherein the first longitudinal axis is substantially parallel to the second longitudinal axis.

9. Manipulator according to any one of the previous claims, wherein the first pivoting connection of the first link is configured for limiting a single rotational degree of freedom of the first link, preferably configured to prevent a single rotational degree of freedom of the first link.

10. Manipulator according to any one of the previous claims, wherein the second pivoting connection of the first link defines an axis of rotation of the stage, preferably wherein the second pivoting connection is configured for providing a single rotational degree of freedom about the axis of rotation, preferably wherein the stage comprises a sidewall being at least in part circular about the axis of rotation.

11. Manipulator according to any one of the previous claims, wherein the end effector is connected to the stage at a second position offset from the second pivoting connection of the first link.

12. Manipulator according to any one of the previous claims, wherein the end effector comprises an energy transfer unit, preferably wherein the energy transfer unit is pivotally connected to the stage.

13. Manipulator according to any one of the previous claims, wherein the first link provides a conduit parallel to the first longitudinal axis configured for providing passage for the second link.

14. Manipulator according to any one of the previous claims, further comprising an energy cable configured to transfer energy along the first link to the end effector, wherein the first link provides a conduit parallel to the first longitudinal axis configured for providing passage for the energy cable.

15. Charging station comprising a converter and a manipulator of any one of the previous claims, wherein the converter is configured for providing electrical energy to the energy transfer unit of the manipulator.

## Patentansprüche

1. Manipulator (100) zum Positionieren eines Endeffektors (103) zum Laden von Fahrzeugen, umfassend:
einen Träger (101),
eine Plattform (106), die den Endeffektor umfasst,
ein erstes Bindeglied (102), umfassend ein erstes Ende (105), das eine mit dem Träger verbundene erste Schwenkverbindung (104) bereitstellt, und ein zweites Ende (107), das eine mit der Plattform verbundene zweite Schwenkverbindung (135) bereitstellt, wobei das erste Bindeglied eine erste Längsachse zwischen dem ersten Ende und dem zweiten Ende definiert, und
ein zweites Bindeglied (132), umfassend ein erstes Ende (133), das eine mit dem Träger verbundene erste Schwenkverbindung bereitstellt, und ein zweites Ende (134), das eine zweite Schwenkverbindung bereitstellt, die an einer ersten Position, die von der zweiten Schwenkverbindung des ersten Bindeglieds versetzt ist, mit der Plattform verbunden ist,
**gekennzeichnet dadurch, dass** der Manipulator ferner Folgendes umfasst:
einen ersten (108) und einen zweiten (109) Betätigungsmechanismus, der über das erste Bindeglied eine betätigbare Verbindung zwischen der Plattform und dem Träger bereitstellt, wobei jeder von dem ersten und dem zweiten Betätigungsmechanismus dazu konfiguriert ist, eine erste Betätigungskraft auf das erste Bindeglied auszuüben, um das zweite Ende des ersten Bindeglieds durch ein Volumen zu bewegen.

2. Manipulator nach Anspruch 1, wobei jeder von dem ersten und dem zweiten Betätigungsmechanismus dazu konfiguriert ist, eine erste lineare Betätigungskraft auf das erste Bindeglied auszuüben, um das zweite Ende des ersten Bindeglieds relativ zu dem ersten Ende des ersten Bindeglieds durch ein Volumen zu bewegen.

3. Manipulator nach Anspruch 1 oder 2, wobei die erste Betätigungskraft des ersten und des zweiten Betätigungsmechanismus jeweils ein Drehmoment um die erste Schwenkverbindung des ersten Bindeglieds herum bereitstellt, wobei bevorzugt eine Richtung des von dem ersten Betätigungsmechanismus bereitgestellten Drehmoments nicht parallel zu einer Richtung des von dem zweiten Betätigungsmechanismus bereitgestellten Drehmoments ist.

4. Manipulator nach einem der vorhergehenden Ansprüche, wobei der erste und der zweite Betätigungsmechanismus jeweils ein drittes und ein viertes Bindeglied umfassen, wobei jedes von dem dritten (112) und dem vierten (113) Bindeglied ein erstes Ende (114, 115), das eine mit dem Träger verbundene erste Schwenkverbindung bereitstellt, und ein zweites Ende (116, 117), das eine mit dem ersten Bindeglied verbundene zweite Schwenkverbindung bereitstellt, umfasst, und wobei der erste Betätigungsmechanismus einen ersten Aktuator (125, 126) umfasst, der zum Bewegen des ersten Endes des dritten Bindeglieds relativ zu dem Träger entlang einer ersten Bewegungsbahn (118) konfiguriert ist ,und wobei der zweite Betätigungsmechanismus einen zweiten Aktuator (125, 126) umfasst ,der zum Bewegen des ersten Endes des vierten Bindeglieds relativ zu dem Träger entlang einer zweiten Bewegungsbahn (119) konfiguriert ist, wobei bevorzugt eine von der ersten und der zweiten Schwenkverbindung sowohl des dritten als auch des vierten Bindeglieds zum Begrenzen eines einzelnen Drehfreiheitsgrades des entsprechenden jeweiligen Bindeglieds konfiguriert ist, wobei bevorzugt die jeweilige Schwenkverbindung dazu konfiguriert ist, einen einzelnen Drehfreiheitsgrad des entsprechenden jeweiligen Bindeglieds zu verhindern, wobei bevorzugt der erste und der zweite Aktuatormechanismus jeweils ein erstes (120) und ein zweites (121) prismatisches Gelenk umfassen, das mit dem entsprechenden ersten Ende verbunden ist, und wobei der erste und der zweite Aktuator jeweils eine zweite Betätigungskraft bereitstellen ,die dazu konfiguriert ist, mit der entsprechenden Bewegungsbahn kollinear zu sein, wobei bevorzugt das prismatische Gelenk und die entsprechende Bewegungsbahn kollinear sind.

5. Manipulator nach einem der vorhergehenden Ansprüche, ferner umfassend eine Basis (127) und einen dritten Aktuator (128, 131), wobei der dritte Aktuator zum Bewegen des Trägers entlang einer dritten Bewegungsbahn (129) relativ zu der Basis konfiguriert ist, bevorzugt ferner umfassend ein drittes prismatisches Gelenk (130), das zum Führen einer Bewegung des Trägers in Bezug auf die Basis konfiguriert ist, wobei bevorzugt das dritte prismatische Gelenk mindestens eine Teleskopführung zum Führen der Bewegung umfasst, wobei jede der mindestens einen Teleskopführung einen Hub aufweist, der im Wesentlichen parallel zu der dritten Bewegungsbahn ist, bevorzugt ferner umfassend ein Gehäuse (110), wobei der dritte Aktuator zum Bewegen des Trägers zwischen einem ersten Zustand, wobei das erste Bindeglied vollständig im Inneren des Gehäuses aufgenommen ist, und einem zweiten Zustand, wobei das erste Bindeglied sich mindestens teilweise von einer Seite des Gehäuses aus erstreckt, konfiguriert ist, wobei bevorzugt, in Zusammenwirken mit Anspruch 4, die erste und die zweite Bewegungsbahn eine erste Ebene definieren und wobei die erste Bewegungsbahn, die zweite Bewegungsbahn und eine Projektion der dritten Bewegungsbahn auf die erste Ebene in Bezug zueinander eines aus einer Liste aus Folgendem aufweisen: einen spitzen Winkel (α, β, γ) von weniger als 60 Grad, bevorzugt weniger als 30 Grad, mehr bevorzugt weniger als 10 Grad und noch mehr bevorzugt weniger als 5 Grad und keinen Winkel.

6. Manipulator nach Anspruch 4 oder 5, wobei die erste und die zweite Bewegungsbahn eine erste Ebene definieren, wobei das erste Ende des ersten Bindeglieds in einer zweiten Ebene bereitgestellt ist, die sich von der ersten Ebene unterscheidet und parallel zu der ersten Ebene ist, und wobei mindestens eines aus dem ersten Ende des dritten Bindeglieds, dem zweiten Ende des dritten Bindeglieds, dem ersten Ende des vierten Bindeglieds und dem zweiten Ende des vierten Bindeglieds außerhalb der zweiten Ebene konfiguriert ist.

7. Manipulator nach einem der Ansprüche 4 bis 6, wobei das erste Ende des ersten Bindeglieds abstandsgleich von der ersten Bewegungsbahn und der zweiten Bewegungsbahn konfiguriert ist, wobei bevorzugt das erste Ende des zweiten Bindeglieds in näherer Lage zu der ersten Bewegungsbahn als zu der zweiten Bewegungsbahn konfiguriert ist.

8. Manipulator nach einem der vorhergehenden Ansprüche, wobei das erste Ende und das zweite Ende des zweiten Bindeglieds eine zweite Längsachse definieren und wobei die erste Längsachse im Wesentlichen parallel zu der zweiten Längsachse ist.

9. Manipulator nach einem der vorhergehenden Ansprüche, wobei die erste Schwenkverbindung des ersten Bindeglieds zum Begrenzen eines einzelnen Drehfreiheitswinkels des ersten Bindeglieds konfiguriert ist, bevorzugt dazu konfiguriert ist, einen einzelnen Drehfreiheitswinkel des ersten Bindeglieds zu verhindern.

10. Manipulator nach einem der vorhergehenden Ansprüche, wobei die zweite Schwenkverbindung des ersten Bindeglieds eine Drehachse der Plattform definiert, wobei bevorzugt die zweite Schwenkverbindung zum Bereitstellen eines einzelnen Drehfreiheitswinkels um die Drehachse herum konfiguriert ist, wobei bevorzugt die Plattform eine Seitenwand umfasst, die mindestens teilweise kreisförmig um die Drehachse herum ist.

11. Manipulator nach einem der vorhergehenden Ansprüche, wobei der Endeffektor mit der Plattform an einer zweiten Position verbunden ist, die zu der zweiten Schwenkverbindung des ersten Bindeglieds versetzt ist.

12. Manipulator nach einem der vorhergehenden Ansprüche, wobei der Endeffektor eine Energieübertragungseinheit umfasst, wobei bevorzugt die Energieübertragungseinheit schwenkbar mit der Plattform verbunden ist.

13. Manipulator nach einem der vorhergehenden Ansprüche, wobei das erste Bindeglied einen Kanal parallel zu der ersten Längsachse umfasst, der zum Bereitstellen eines Durchgangs für das zweite Bindeglied konfiguriert ist.

14. Manipulator nach einem der vorhergehenden Ansprüche, ferner umfassend ein Energiekabel, das dazu konfiguriert ist, Energie entlang dem ersten Bindeglied zu dem Endeffektor zu übertragen, wobei das erste Bindeglied einen Kanal parallel zu der ersten Längsachse bereitstellt, der zum Bereitstellen eines Durchgangs für das Energiekabel konfiguriert ist.

15. Ladestation, umfassend einen Wandler und ein Manipulator nach einem der vorhergehenden Ansprüche, wobei der Wandler zum Bereitstellen elektrischer Energie an die Energieübertragungseinheit des Manipulators konfiguriert ist.

## Revendications

1. Manipulateur (100) pour positionner un effecteur terminal (103) pour la charge de véhicules, comprenant :
un support (101),
une platine (106) comprenant l'effecteur terminal,
une première liaison (102) comprenant une première extrémité (105) fournissant un premier raccord pivotant (104) raccordé au support et une deuxième extrémité (107) fournissant un deuxième raccord pivotant (135) raccordé à la platine, dans lequel la première liaison définit un premier axe longitudinal entre la première extrémité et la deuxième extrémité, et
une deuxième liaison (132) comprenant une première extrémité (133) fournissant un premier raccord pivotant raccordé au support et une deuxième extrémité (134) fournissant un deuxième raccord pivotant raccordé à la platine au niveau d'une première position décalée par rapport au deuxième raccord pivotant de la première liaison,
**caractérisé en ce que** le manipulateur comprend en outre :
un premier (108) et un deuxième (109) mécanisme d'actionnement fournissant un raccord actionnable entre la platine et le support par l'intermédiaire de la première liaison, chacun des premier et deuxième mécanismes d'actionnement étant configuré pour exercer une première force d'actionnement sur la première liaison pour déplacer la deuxième extrémité de la première liaison à travers un volume.

2. Manipulateur selon la revendication 1, dans lequel chacun des premier et deuxième mécanismes d'actionnement est configuré pour exercer une première force d'actionnement linéaire sur la première liaison pour déplacer la deuxième extrémité de la première liaison par rapport à la première extrémité de la première liaison à travers un volume.

3. Manipulateur selon la revendication 1 ou 2, dans lequel les premières forces d'actionnement des premier et deuxième mécanismes d'actionnement fournissent chacune un couple autour du premier raccord pivotant de la première liaison, de préférence dans lequel une direction du couple fourni par le premier mécanisme d'actionnement n'est pas parallèle à une direction du couple fourni par le deuxième mécanisme d'actionnement.

4. Manipulateur selon l'une quelconque des revendications précédentes, dans lequel les premier et deuxième mécanismes d'actionnement comprennent respectivement une troisième et une quatrième liaison, dans lequel chacune des troisième (112) et quatrième (113) liaisons comprend une première extrémité (114, 115) fournissant un premier raccord pivotant raccordé au support et une deuxième extrémité (116, 117) fournissant un deuxième raccord pivotant raccordé à la première liaison, et dans lequel le premier mécanisme d'actionnement comprend un premier actionneur (125, 126) configuré pour déplacer la première extrémité de la troisième liaison par rapport au support le long d'une première trajectoire (118) et dans lequel le deuxième mécanisme d'actionnement comprend un deuxième actionneur (125, 126) configuré pour déplacer la première extrémité de la quatrième liaison par rapport au support le long d'une deuxième trajectoire (119), de préférence dans lequel l'un des premier et deuxième raccords pivotants d'à la fois les troisième et quatrième liaisons est configuré pour limiter un seul degré de liberté en rotation de la liaison respective correspondante, de préférence le raccord pivotant respectif est configuré pour empêcher un seul degré de liberté en rotation de la liaison respective correspondante, de préférence dans lequel les premier et deuxième mécanismes d'actionnement comprennent respectivement une première (120) et une deuxième (121) articulations prismatiques raccordées à la première extrémité correspondante, et dans lequel le premier et le deuxième actionneur fournissent chacun une deuxième force d'actionnement configurée pour être colinéaire avec la trajectoire correspondante, de préférence dans lequel l'articulation prismatique et la trajectoire correspondante sont colinéaires.

5. Manipulateur selon l'une quelconque des revendications précédentes, comprenant en outre une base (127) et un troisième actionneur (128, 131), dans lequel le troisième actionneur est configuré pour déplacer le support le long d'une troisième trajectoire (129) par rapport à la base, comprenant de préférence en outre une troisième articulation prismatique (130) configurée pour guider un mouvement du support par rapport à la base, de préférence dans lequel la troisième articulation prismatique comprend au moins un guide télescopique pour guider le mouvement, dans lequel chacun de l'au moins un guide télescopique a une course sensiblement parallèle à la troisième trajectoire, comprenant de préférence en outre un boîtier (110), dans lequel le troisième actionneur est configuré pour déplacer le support entre un premier état, dans lequel la première liaison est complètement reçue à l'intérieur du boîtier, et un deuxième état, dans lequel la première liaison s'étend au moins en partie depuis un côté du boîtier, de préférence en conjonction avec la revendication 4, dans lequel les première et deuxième trajectoires définissent un premier plan et dans lequel la première trajectoire, la deuxième trajectoire et une projection de la troisième trajectoire sur le premier plan ont chacune l'une par rapport à l'autre, l'un parmi une liste de : un angle aigu (α, β, γ) de moins de 60 degrés, de préférence de moins de 30 degrés, plus préférablement de moins de 10 degrés et encore plus préférablement de moins de 5 degrés et aucun angle.

6. Manipulateur selon la revendication 4 ou 5, dans lequel les première et deuxième trajectoires définissent un premier plan, dans lequel la première extrémité de la première liaison est prévue dans un deuxième plan autre que le premier plan et parallèle au premier plan et dans lequel au moins l'une de la première extrémité de la troisième liaison, de la deuxième extrémité de la troisième liaison, de la première extrémité de la quatrième liaison et de la deuxième extrémité de la quatrième liaison est configurée à l'extérieur du deuxième plan.

7. Manipulateur selon l'une quelconque des revendications 4 à 6, dans lequel la première extrémité de la première liaison est configurée à équidistance de la première trajectoire et de la deuxième trajectoire, de préférence dans lequel la première extrémité de la deuxième liaison est configurée à proximité plus étroite de la première trajectoire que de la deuxième trajectoire.

8. Manipulateur selon l'une quelconque des revendications précédentes, dans lequel la première extrémité et la deuxième extrémité de la deuxième liaison définissent un deuxième axe longitudinal et dans lequel le premier axe longitudinal est sensiblement parallèle au deuxième axe longitudinal.

9. Manipulateur selon l'une quelconque des revendications précédentes, dans lequel le premier raccord pivotant de la première liaison est configuré pour limiter un seul degré de liberté en rotation de la première liaison, de préférence configuré pour empêcher un seul degré de liberté en rotation de la première liaison.

10. Manipulateur selon l'une quelconque des revendications précédentes, dans lequel le deuxième raccord pivotant de la première liaison définit un axe de rotation de la platine, de préférence dans lequel le deuxième raccord pivotant est configuré pour fournir un seul degré de liberté en rotation autour de l'axe de rotation, de préférence dans lequel la platine comprend une paroi latérale étant au moins en partie circulaire autour de l'axe de rotation.

11. Manipulateur selon l'une quelconque des revendications précédentes, dans lequel l'effecteur terminal est raccordé à la platine au niveau d'une deuxième position décalée par rapport au deuxième raccord pivotant de la première liaison.

12. Manipulateur selon l'une quelconque des revendications précédentes, dans lequel l'effecteur terminal comprend une unité de transfert d'énergie, de préférence dans lequel l'unité de transfert d'énergie est raccordée de manière pivotante à la platine.

13. Manipulateur selon l'une quelconque des revendications précédentes, dans lequel la première liaison fournit un conduit parallèle au premier axe longitudinal configuré pour fournir un passage pour la deuxième liaison.

14. Manipulateur selon l'une quelconque des revendications précédentes, comprenant en outre un câble d'énergie configuré pour transférer de l'énergie le long de la première liaison jusqu'à l'effecteur terminal, dans lequel la première liaison fournit un conduit parallèle au premier axe longitudinal configuré pour fournir un passage au câble d'énergie.

15. Station de charge comprenant un convertisseur et un manipulateur selon l'une quelconque des revendications précédentes, dans laquelle le convertisseur est configuré pour fournir de l'énergie électrique à l'unité de transfert d'énergie du manipulateur.
